# EUROPEAN PATENT APPLICATION

(11) **EP 1 681 329 A2**
(43) Date of publication of application: **19.07.2006**
(21) Application number: 06000384.5
(22) Date of filing: 10.01.2006
(51) Int. Cl.: C09K 3/10

(54) **Non-asbestos gaskets sheet**

(30) Priority: 12.01.2005 JP 2005004868
(71) Applicant: Nichias Co., Ltd., Tokyo 105-8555 (JP)
(72) Inventor: Itol, Katustoyo c/o Nichias Corporation, Hamamatsu-shi Shizuoka 431-2103 (JP); Kodaka, Koujirou c/o Nichias Corporation, Hamamatsu-shi Shizuoka 431-2103 (JP); Saito, Hiroshi c/o Nichias Corporation, Hamamatsu-shi Shizuoka 431-2103 (JP)
(74) Representative: Herzog, Martin

(57) **Abstract**

A non-asbestos gasket sheet including a composition which includes a base fiber containing an organic fiber as a major fiber component, rubber, a filler, and a rubber chemical, the amount of the organic fiber in the composition is 15 to 30 wt%, and the filler including graphite. The non-asbestos gasket sheet exhibits tensile strength equivalent to or greater than that of an asbestos joint sheet, and can be used under high temperature conditions.

## Description

### BACKGROUND OF THE INVENTION

### Field of the Invention

The present invention relates to a non-asbestos gasket sheet (hereinafter referred to as "NA gasket sheet") used in a wide variety of fields such as petrochemical plants, various industrial mechanical apparatuses, vehicles, marine vessels, and household appliances.

### Description of Background Art

A joint sheet which is a common gasket sheet is manufactured by sufficiently mixing a base material fiber, fillers, rubber chemicals, and rubber dissolved in a solvent using a Henschel mixer or the like to prepare a raw material mixture composition, feeding the composition to a pair of calender rollers consisting of a hot roller heated to about 150°C and a cold roller maintained at about 20°C to produce a laminate of the composition on the hot roller side, while vaporizing the solvent and vulcanizing the rubber, and removing a sheet that has become to a predetermined thickness from the hot roller.

Conventionally, asbestos joint sheets using asbestos as a base fiber material have been widely used. Due to advantages of the form peculiar to asbestos and the outstanding heat resistance of asbestos, asbestos joint sheets formed by a punching process have been used as joints for pipes and gaskets for apparatuses in which water, oil, air, steam, and the like flow. An asbestos joint sheet contains 65 to 85 wt% of asbestos which is a very flexible fibrillated material even though being an inorganic substance. Since asbestos fibers are sufficiently distributed in entangled conditions, the joint sheets have a large tensile strength, are flexible, and can exhibit elasticity due to the entanglement of asbestos fibers even if included rubbers deteriorate after heating. For these reasons, the asbestos joint sheets can constantly maintain the sealing properties for a long period of time without a decrease in the clamping stress.
However, since there is a concern about unavailability of asbestos which is a natural mineral, an asbestos-free joint sheet containing no asbestos or a non-asbestos joint sheet (NA joint sheet) containing either an inorganic fiber other than asbestos or an organic fiber, or both an inorganic fiber other than asbestos and organic fiber has recently been used. The NA joint sheet, however, cannot replace the asbestos joint under severe conditions, because the former is inferior to the latter in properties such as tensile strength.

Japanese Patent Application Laid-open No. 2001-262126 discloses a joint sheet obtained by feeding a blend of a base fiber other than asbestos, rubber, fillers, and rubber chemicals between a hot roller and a cold roller and laminating a sheet-like material on the hot roller side. The joint sheet contains 40 wt% or more of fillers with a particle size of 5 to 13 µm. This joint sheet has high tensile strength, low compressibility, and good flexibility.

Japanese Patent Application Laid-open No. 2001-172611 discloses a joint sheet obtained by feeding a blend of a base fiber other than asbestos, rubber, fillers, and rubber chemicals between a hot roller and a cold roller and laminating a sheet-like material on the hot roller side. The joint sheet contains polytetrafluoroethylene resin fiber. This NAjoint sheet is free from the phenomenon in which a kneaded material adheres to the cold roller side during the manufacturing process and can maintain pliability to the extent that the clamping force can be increased even if the joint sheet is used in a high temperature atmosphere.

However, when an organic fiber which is fibrillated like asbestos such as an aromatic polyamide fiber is used as a base fiber in the NA joint sheet, the amount of the organic fiber is limited usually to 5 to 15 wt%, because such an organic fiber has a fiber diameter larger than asbestos fiber and is inferior to asbestos fiber in heat resistance and steam resistance. Many inorganic fibers such as rock wool, carbon fiber, and glass fiber can also be used as a base fiber only to the extent of 10 to 30 wt%, because inorganic fibers are more rigid and their fiber diameters are larger as compared with the asbestos fiber. Many organic fibers are easily broken during mixing or forming. If used in a large amount, the inorganic fiber materials may attach to the surface of a cold roller during lamination onto a hot roller side using a calender roller, thereby significantly impairing forming efficiency. When used under a high temperature atmosphere or a steamy atmosphere in which rubber easily deteriorates from heat and steam, the NA joint sheet which contains a smaller amount of fibers and a larger amount of fillers as compared with the asbestos joint sheet easily becomes brittle and cannot maintain adequate tensile strength. Therefore, conventional NA joint sheets could not be used under high temperature conditions in which asbestos joint sheets could be used.

An object of the present invention is therefore to solve these conventional problems and to provide a non-asbestos gasket sheet exhibiting tensile strength equivalent to or greater than the asbestos joint sheet and capable of being used under high temperature conditions.

### SUMMARY OF THE INVENTION

As a result of extensive studies in view of this situation, the inventors of the present invention have found that an NA gasket sheet made from a gasket sheet composition comprising a base fiber containing an organic fiber as a major fiber component, rubber, a filler, and a rubber chemical exhibits tensile strength equivalent to or greater than that of the asbestos joint sheet and can be used under high temperature conditions, if the content of the organic fiber is 15 to 30 wt% and the filler is graphite. This finding has led to the completion of the present invention.

Specifically, the present invention provides a non-asbestos gasket sheet comprising a composition including a base fiber containing an organic fiber as a major fiber component, rubber, a filler, and a rubber chemical, the amount of the organic fiber in the composition being 15 to 30 wt%, and the filler including graphite.

The non-asbestos gasket sheet of the present invention exhibits tensile strength equivalent to or greater than that of the asbestos joint sheet and can be used under high temperature conditions.

### DETAILED DESCRIPTION OF PREFERRED EMBODIMENT

The base fiber used for an NA gasket sheet of the present invention contains an organic fiber as the main fiber component. The amount of the organic fiber in the composition is 15 to 30 wt%, preferably 15 to 20 wt%, and particularly preferably 16 to 20 wt%. If the amount of the organic fiber is less than 15 wt%, the gasket sheet exhibits inferior tensile strength; if more than 30 wt%, the gasket sheet exhibits inferior steam resistance. There are no specific limitations to the organic fiber used in the gasket sheet of the present invention. For example, an aromatic polyamide fiber, polyamide fiber, polyolefin fiber, polyester fiber, polyacrylonitrile fiber, polyvinyl alcohol fiber, polyvinyl chloride fiber, polyurea fiber, polyurethane fiber, polyfluorocarbon fiber, phenol fiber, cellulosic fiber, and the like can be mentioned. Of these, an aromatic polyamide fiber is preferable due to not only the high heat resistance and steam resistance af the fiber itself, but also the excellent fibrillating processability to produce a sheet with high heat resistance and steam resistance. These organic fibers may be used either individually or in combination of two or more.

Although the base fiber principally contains organic fibers as the main component fibers, inorganic fibers may also be used together with the organic fibers. Examples of the inorganic fiber include, but are not specifically limited to, carbon fiber, rock wool, glass fiber, sepiolite, ceramic fiber, molten quartz fiber, chemically treated silica fiber, molten silica alumina fiber, alumina continuous fiber, stabilized zirconia fiber, boron nitride fiber, alkali titanate fiber, a whisker, boron fiber, metal fiber, and the like. These inorganic fibers may be used either individually or in combinations of two or more.

As examples of the rubber used in the NA gasket sheet of the present invention, acrylonitrile-butadiene rubber, hydrogenated acrylonitrile-butadiene rubber, acryl rubber, ethylene-propylene rubber, styrene-butadiene rubber, chloroprene rubber, butadiene rubber, butyl rubber, fluororubber, silicone rubber, chlorosulfonated polyethylene, ethylene-vinyl acetate rubber, chlorinated polyethylene, chlorinated butyl rubber, epichlorohydrin rubber, nitrile-isoprene rubber, natural rubber, isoprene rubber, and the like may be given. Of these, acrylonitrile-butadiene rubber and rubber materials containing the acrylonitrile butadiene rubber are preferable because of the high oil resistance. These rubber materials may be used either individually or in combination of two or more.

The types of graphite used as the filler for the NA gasket sheet of the present invention include, but are not limited to, scale graphite, exfoliated graphite, and earthy graphite. Of these, the scale graphite and exfoliated graphite are preferable because of the large tensile strength which is a result of a strong Van der Waals force due to a large contact surface among graphite particles. A combination of the scale graphite or exfoliated graphite with the earthy graphite is particularly preferable due to high productivity. The amount of the graphite is 35 to 80 wt%, and preferably 40 to 75 wt% of the composition. If the amount of the graphite in the composition is less than 35 wt%, the tensile strength will be poor. If the amount of the graphite is more than 80 wt%, not only is it difficult to produce a good sheet, but also the tensile strength of the sheet decreases, because a large amount of graphite decreases the amount of rubber and fiber used as the binder, giving rise to a decrease in the interlayer strength, which may result in swelling of the sheet during preparation. The reason for the increased tensile strength of NA gasket sheet by the use of graphite as a filler in the amount of the above range is presumed to be the result of the characteristics of graphite of being stable in heat and steam and the strong skeleton structure formed by the Van der Waals force among the graphite particles. Therefore, inclusion of fillers other than graphite is undesirable because of an undue decrease of tensile strength due to inhibition of the Van der Waals force by heat and steam, even if the initial tensile strength is acceptable. However, a small amount of fillers other than graphite is allowable inasmuch as the tensile strength of the NA gasket sheet is not impaired.

As the rubber chemical for of NA gasket sheet of the present invention a wide variety of known rubber chemicals for joint sheets production can be used. Examples include vulcanizing agents such as sulfur, zinc oxide, magnesium oxide, peroxide, and dinitrosobenzene, vulcanizing accelerators such as polyamine compounds, aldehyde amine compounds, thiuram compounds, dithiocarbamic acid salt compounds, sulfene-amide compounds, thiazole compounds, guanidine compounds, thiourea compounds, and xanthate compounds, aging preventives, antiscorching agents, plasticizers, coloring agents, and the like.

An NA joint sheet having a tensile strength equivalent to or greater than the asbestos joint sheet and exhibiting better sealing properties can be obtained using the NA gasket sheet of the present invention. In particular, the NA joint sheet exhibits no decrease in tensile strength at a high temperature and excellent sealing properties under severe conditions.

As the method for manufacturing of the NA gasket sheet of the present invention, a method of using a calender roll and a method of using a paper mill can be given. An example of the method of using a calender roll will be described.

A base fiber material containing an organic fiber as a main component, rubber, graphite, and a rubber chemical are dissolved in a solvent such as toluene, and mixed for about 20-60 minutes using a Henschel mixer, kneader, or the like to prepare a raw material mixture. The obtained raw material mixture is fed between a pair of calendar roller consisting of a hot roller heated to 120-160°C and a cold roller maintained at 20-50°C to be laminated to a prescribed thickness and wound around on the hot roller side, while vaporizing the solvent and vulcanizing the rubber. The laminated and wound sheet is removed from the hot roller to obtain a sheet material. The resulting sheet is removed from the hot rollers may be subjected to second vulcanization in an autoclave to advance the vulcanization.

One example of the method of using a paper mill will be described below.

Specifically, this method comprises forming a sheet from slurry containing a base fiber material containing an organic fiber as a main component, rubber, graphite, and a rubber chemical, and drying and rolling the resulting sheet. Although there are no specific limitations to the order of addition of the raw materials in the process for manufacturing the slurry, a method of first charging the base fiber and water to a refiner in order to prepare a first slurry in which the base fiber is homogeneously dispersed is preferable to ensure homogeneous dispersion of a large amount of organic fiber in the gasket sheet. Rubber, graphite, and a rubber chemical or a coagulant is then added to obtain slurry. The slurry is applied to a known paper making machine to obtain a sheet with a thickness of 3.0 mm, for example. If a fiber other than the organic fiber, for example, an inorganic fiber, is used together with the organic fiber, slurry in which the inorganic fiber is dispersed is separately prepared and mixed with the first slurry. A filler may be added to the inorganic fiber-dispersed slurry. Although not specifically limited, a cylinder paper machine, a Fourdrinier paper machine, and the like can be used. The cylinder paper machine is preferable due to high yield.

The sheet is dried and rolled. A sheet with a thickness of 3,0 mm, for example, is rolled to a thickness of 1.5 mm, for example. There are no specific limitations to the rolling method. A method of passing the sheet between a pair of hot rollers (hot rolling) and a method of using a press machine can be given. The method of passing the sheet between a pair of hot rollers (hot rolling) is more preferable in view of high productivity. As a specific method of hot rolling, a method of passing a dry sheet through a space between a pair of hot rollers at 100 to 120°C to roll it out with a prescribed linear load can be given, for example. The resulting sheet material removed from the hot rollers may be subjected to a second vulcanization in an autoclave to advance vulcanization.

The gasket sheet obtained in this manner contains graphite which is stable against heat and steam as a filler and exhibits a tensile strength equivalent to or greater than the asbestos joint sheet and better sealing properties in an initial stage and at a high temperature due to a strong skeleton structure of graphite particles bonded together by a Van der Waals force.

The NA gasket sheet of the present invention has a tensile strength of 20 to 50 MPa and a flexibility of 10 to 15. The NA gasket sheet of the present invention is used in flanges with or without a paste applied thereto as a gasket base material used in a variety of fields such as petrochemical plants, various industrial mechanical apparatuses, vehicles, marine vessels, and household appliances.

### EXAMPLES

The present invention will be described in more detail by examples, which should not be construed as limiting the present invention.

### Example 1

A raw material mixture was prepared by mixing the base fiber, rubber, rubber chemical, filler, and toluene at a proportion shown in Table 1 for 20 minutes using a Henschel mixer at a low-speed rotation. The obtained mixture was fed between a hot roller heated to 150°C and a cold roller maintained at 20°C. The raw material was laminated on the hot roller side while vulcanizing under pressure to obtain an NA gasket sheet with a thickness of 1.5 mm. The amount of each component added to the slurry was adjusted to obtain the composition of the components in the finished NA gasket sheet shown in Table 1. The unit for the values shown in Table 1 is "wt%". In the table, NBR indicates acrylonitrile-butadiene rubber, HNBR indicates hydrogenated acrylonitrile-butadiene rubber, SBR indicates styrene-butadiene rubber, and EPDM indicates ethylene propylene rubber. The tensile strength under different conditions of the resulting NA gasket sheets was evaluated. The tensile strength under normal conditions and after dipping in oil was measured according to the joint sheet test standard of JIS R3453, the tensile strength after deterioration from heat was measured using samples caused to deteriorate in a forced convection drying oven at 300°C for 70 hours, and the tensile strength after deterioration from steam was measured using samples caused to deteriorate in a sealed vessel of which the internal atmosphere was saturated with steam at 10 Kg/cm² for 70 hours. The results are shown in Table 2.

### Examples 2 to 5

NA gasket sheets with a thickness of 1.5 mm were prepared in the same manner as in Example 1 except for using materials with a composition shown in the columns of Examples 2 to 5 in Table 1. The tensile strength was measured in the same manner as in Example 1. The results are shown in Table 2.

### Comparative Examples 1 to 3

NA gasket sheets with a thickness of 1.5 mm were prepared in the same manner as in Example 1 except for using materials with a composition shown respectively in the columns of Comparative Examples 1 to 3 in Table 1, The tensile strength was measured in the same manner as in Example 1. The results are shown in Table 2.

**TABLE 1**

| Raw Material | | Example | | | | | Comparative Example | | |
|---|---|---|---|---|---|---|---|---|---|
| | | 1 | 2 | 3 | 4 | 5 | 1 | 2 | 3 |
| Base Fiber | Aromatic polyamide fiber | 25 | 17 | 17 | 17 | 17 | 13 | 17 | **-** |
| | Asbestos | - | - | - | - | - | - | - | 70 |
| Rubber | NBR | 27 | 10 | 5 5 | - | - | 13 | 10 | 10 |
| | HNBR | - | - | 3 | 10 | - | - | - | - |
| | SBR | - | - | - | - | 10 | - | - | - |
| | EPDM | - | - | 2 | - | - | - | - | - |
| | Rubber chemical | 8 | 3 | 3 | 3 | 3 | 4 | 3 | 3 |
| Filler | Graphite | 40 | 70 | 70 | 70 | 70 | 70 | 60 | - |
| | Kaolin Clay | - | | - | - | - | - | 10 | 17 |
| Total | | 100 | 100 | 100 | 100 | 100 | 100 | 100 | 100 |

**TABLE 2**

| Raw Material | | Example | | | | | Comparative Example | | |
|---|---|---|---|---|---|---|---|---|---|
| | | 1 | 2 | 3 | 4 | 5 | 1 | 2 | 3 |
| Tensile strenght (MPa) | Normal conditions | 30 | 27 | 30 | 30 | 25 | 22 | 23 | 25 |
| | Deterioration with heat (300°Cx70 hrs) | 20 | 20 | 22 | 23 | 15 | 10 | 8 | 15 |
| | Deterioration with steam (10 Kx70 hrs) | 25 | 19 | 20 | 22 | 15 | 9 | 7 | 25 |
| | Deterioration with oil (IRM 903:150°C×5 hrs) | 25 | 24 | 19 | 22 | 16 | 16 | 21 | 20 |

As can be seen in Tables 1 and 2, the sheets of Examples 1 to 5 exhibited excellent tensile strength under normal conditions as well as after deterioration from heat, steam, or oil equivalent to the asbestos joint sheet of Comparative Example 3. The gasket sheets of Comparative Examples 1 and 2 exhibited poor tensile strength as compared with the asbestos joint sheet, particularly after deterioration from heat or steam, indicating unsatisfactory durability.

## Claims

1. A non-asbestos gasket sheet comprising a composition including a base fiber containing an organic fiber as a major fiber component, rubber, a filler, and a rubber chemical, the amount of the organic fiber in the composition being 15 to 30 wt%, and the filler including graphite.

2. The non-asbestos gasket sheet according to claim 1, wherein the composition includes the graphite in an amount of 35 to 80 wt%.

3. The non-asbestos gasket sheet according to claim 1, wherein the base fiber is the organic fiber.

4. The non-asbestos gasket sheet according to any of claims 1, wherein the organic fiber is an aromatic polyamide fiber.

5. The non-asbestos gasket sheet according to any of claims 1, wherein the rubber includes acrylonitrile-butadiene rubber.
